# EUROPEAN PATENT APPLICATION

(11) **EP 2 085 357 A1**
(43) Date of publication of application: **05.08.2009**
(21) Application number: 08101212.2
(22) Date of filing: 01.02.2008
(51) Int. Cl.: C01B 31/02

(54) **Electropolymerizable surfactant for dispersing carbon nanotubes**

(71) Applicant: UNIVERSITE JOSEPH FOURIER - Grenoble 1, 38400 St. Martin d'Hères (FR); Centre National de la Recherche Scientifique, 75016 Paris (FR)
(72) Inventor: Cosnier, Serge, 38920 Crolles (FR); Holzinger, Michael, 38000 Grenoble (FR); Ionescu, Elena Rodica, Etaj VII, Apt. 505, Sector 4 Bucarest (RO)
(74) Representative: Tetaz, Franck Claude Edouard

(57) **Abstract**

The invention concerns an aqueous composition comprising carbon nanotubes and a surfactant, **characterized in that** the carbon nanotubes are single-wall hydrophobic nanotubes and in that the surfactant is chosen among electropolymerizable surfactant monomers of formula (I):

X-Y-Z (I)

wherein:
X is an electropolymerizable moiety selected from the group consisting of pyrrole, acetylene, phenol, aniline, thiophene, carbazole, indole and azulene
Y is a hydrophobic hydrocarbon chain and
Z is a polar group selected from the group consisting of quaternary ammonium salts, alkylphosphonates and sulfonates.

The invention also relates to a method for the preparation of an aqueous composition as described above, comprising the following steps:
i) solubilisation of the surfactant monomer
ii) addition of the single-wall carbon nanotubes in the aqueous solution comprising said surfactant monomer,
(iii) sonication of the resulting solution, and, optionally
(iv) addition of a protein.

## Description

The present invention concerns an aqueous composition comprising carbon nanotubes and a surfactant.

### BACKGROUND OF THE INVENTION

Carbon nanotubes (CNTs) exhibit unique electrical, geometrical and mechanical properties that make them an attractive material for various applications - for example, the construction of ultra sensitive electrochemical biosensors.

CNTs are found in two distinct types: multiwall carbon nanotubes (MWCNTs) and single-wall carbon nanotubes (SWCNTs), firstly discovered in 1991 and 1993, respectively.

The structure of nanotubes originates from that of graphite. In graphite, carbon atoms are located in hexagonal patterns and form flat two dimensional sheets. Single-walled nanotubes can be viewed as seamless cylinders rolled up from a piece of graphene.

By focusing on the large aspect ratio of the cylinder (i.e. length/diameter which can be as large as 10⁴-10⁵), these nanotubes can be considered as one-dimensional nanostructures which tend to form bundles or ropes with a length of several tens of microns. The Young's modulus of SWCNTs, about 1TPa, is five times higher than that of steel. Compared to this theoretically predicted tensile strength, the maximum tensile stress one material can sustain before failure, is 130GPa. At the same time, SWCNTs are extremely light.

By analogy to graphite and carbon fibers, nanotubes are expected to be very strong and have high elastic moduli. Single-walled carbon nanotubes are also expected to resist fracture under extension, just as the carbon fibres commonly used in aerospace applications. According to calculations, a nanotube can be elongated by several percent without fracturing. Unlike carbon fibres, however, single-walled carbon nanotubes are remarkably flexible. They can be twisted, flattened and bent into small circles or around sharp bends without breaking. Moreover, molecular dynamics simulations indicate that in many cases the nanotube should regain its original shape when the stresses are removed.

One can view carbon nanotubes as giant conjugated molecular wires with a conjugation length corresponding to the whole length of the tube. In order to understand their electronic structure, a single sheet of graphite is employed as a model. Carbon has four valence electrons, of which three are strongly bound to neighbour atoms giving graphene its very high in-plane rigidity. The fourth electron is delocalized and shared by all the atoms, thus allowing electronic current transport. However, because of its particular structure graphene is electronically in between a semiconductor and a metal: it is a semimetal, or a "zero-gap" semiconductor.

This peculiarity renders the electronic states very sensitive to additional boundary conditions, such as that created by a single shell of a carbon nanotube. A stationary electron wave can only develop, if the circumference of the tube is a multiple of the electron wavelength. This condition removes the zero gap property of graphene and turns each nanotube into either a true metal or a semiconductor, depending on its helicity. The helicity gives a fascinating richness for the engineering of electronic properties of SWCNTs. However, for the time being, neither the diameter nor nanotubes' helicity can be controlled during the synthesis and, at the present time this "richness" is more a drawback than an advantage.

A perfect metallic nanotube with uncorrelated electrons is expected to be a ballistic conductor, surpassed in conductivity by superconductors. If an electron is injected from a contact into a ballistic wire with ideal contacts, the electron will emerge with certainty at the drain contact. There is no backscattering in the wire, which is the source of intrinsic electric resistance and leads to Ohm's law. However, the resistance is not zero, as it would be for a superconductor, and in contrast to classical resistors and to Ohm's law, the resistance is independent of the length of the wire.

Due to these exceptional structural, mechanical and electronic properties, CNTs are ideal materials to make detectors that are capable to reach single-molecule level sensitivity.

However, the lack of solubility of carbon nanotubes prevents the exploitation of these unique properties.

Much effort has therefore been invested in developing approaches for reproducible dispersions of individual carbon nanotubes.

In order to develop high property CNT-based materials, fully utilizing the unique properties of the tubes, the thermodynamic drive toward aggregation must be overcome.

There are two distinct approaches for dispersing carbon nanotubes: the mechanical method and methods that are designed to alter the surface energy of the solids, either physically with the help of surfactants or chemically by functionalizing the nanotubes.

Mechanical dispersion methods, such as ultrasonication and high shear mixing, separate nanotubes from each other, but also fragments the nanotubes, decreasing their aspect ratio.

Chemical methods use surface functionalization of CNT to improve their chemical compatibility with the target medium that is to enhance wetting or adhesion characteristics and reduce their tendency to agglomerate.

Chen *et. al*. reported in 1998 the first chemical attachment of organic functional groups to SWCNT materials via amide formation between carboxylic acid groups of oxidized nanotubes and amines to obtain nanotube derivatives, which are soluble in organic solvents.

Since this scientific finding, a vast number of different functionalization methods have been developed, not only to solubilise carbon nanotubes but also to attach functional groups to combine the properties of SWCNTs and the addend. Further important achievements of sidewall functionalization for single-walled carbon nanotubes are addition reactions using reactive organic species like radicals, carbenes, nitrenes, azomethine ylides, lithium alkyls, fluorine, and diazonium salts. Control over regio- and chemoselectivity is hard to achieve.

For homogeneous functionalization of tubes, the exfoliation and dissolution of the bundles either before or during the attachment of the addends is important.

Individual nanotubes in dispersion can be obtained by using surfactants and be functionalized after with diazonium salts.

Another example for homogeneous functionalized nanotubes has been reported by Billups and co-workers. There, the nanotubes could be separated due to the electrostatic repulsion after charging with electrons under Birch reduction conditions. Evenly functionalised nanotube samples could then be obtained via electrophilic addition reactions with alkyl halides.

However, aggressive chemical functionalization, such as the use of neat acids at high temperatures, might introduce structural defects resulting in inferior properties for the tubes. Haddon et al. presented a study of the electronic behaviour of films of as-prepared and chemically modified SWCNTs. This report shows the important influence of chemical functionalization to the electronic properties.

Non-covalent treatment is therefore particularly attractive because of the possibility of adsorbing various groups on CNT surface without disturbing the π-system of the graphene sheets. In the last few years, the non-covalent surface treatment by surfactants or polymers has been widely used in the preparation of both aqueous and organic solutions to obtain high weight fraction of individually dispersed nanotubes.

Physical association of polymers with carbon nanotube surfaces was shown to enhance the dispersion of CNT in both water and organic solvents, as well as to enable separation of nanotubes from carbonaceous and metal impurities.

Two mechanisms were suggested: "wrapping" which is believed to rely on specific interactions between a given polymer and the tubes. For example, the reversible association of SWNT with linear polymers, polyvinyl pyrrolidone (PVP) and polystyrene sulfonate (PSS), in water was identified as being thermodynamically driven by the elimination of a hydrophobic interface between the tubes and the aqueous medium. A very different, kinetic mechanism suggests that long-ranged entropic repulsion among polymer-decorated tubes acts as a barrier that prevents the tubes from approaching. Recent small angle neutron scattering studies demonstrated a non-wrapping conformation of polymers in CNT dispersions.

Non-covalent modification of SWNT by encasing the tubes within micelles of cross-linked copolymer polystyrene-blockpolyacrylic acid (PS-b-PAA) was demonstrated. CNT were first ultrasonicated in DMF solution of the copolymer and micellization of the amphiphile was induced by adding water to the nanotube suspension.

In the past years, lots of efforts have been put in the development of biosensors based on carbon nanotubes. Several approaches have been reported to realize electrochemical CNT-biosensor devices.

Recent articles report enzyme-based carbon nanotubes biosensors, where the enzyme is entrapped by electropolymerization. Since polypyrrolic films could provide an optimum support to interact with carbon nanotubes, approaches have been proposed for the fabrication of polypyrrole-nanotube materials for biosensor application.

The article by A. Callegari et al. "Functionalised single wall carbon nanotubes/polypyrrole composites for the preparation of amperometric glucose biosensors", J. Mater. Chem. 2004, 14, 807, reports the use of an amphiphilic pyrrole matrix.

According to this two-step procedure, the solution containing the functionalised SWCNTs, the enzyme and the amphiphilic pyrrole matrix is spread onto the electrode and vacuum dried before subsequent electropolymerization. The functionalised SWCNTs are very soluble in most polar organic solvents and water. However, during vacuum drying and evaporation of the polypyrrole matrix, the aggregation of the nanotubes cannot be avoided.

One goal of the invention is thus to find a method for dispersing single-wall carbon nanotubes in a solution, without functionalizing them. Another goal of the invention is to coat the surface of a material with a polymer comprising well dispersed single-wall carbon nanotubes.

### BRIEF DESCRIPTION OF THE INVENTION

The present invention concerns an aqueous composition comprising carbon nanotubes and a surfactant, wherein the carbon nanotubes are single-wall hydrophobic nanotubes and the surfactant is chosen among electropolymerizable surfactant monomers of formula (I):

X-Y-Z (I)

wherein:
X is an electropolymerizable moiety selected from the group consisting of pyrrole, acetylene, phenol, aniline, thiophene, carbazole, indole and azulene
Y is a hydrophobic hydrocarbon chain and
Z is a polar group selected from the group consisting of quaternary ammonium salts, alkylphosphonates and sulfonates.

The surfactant is advantageously an electropolymerizable surfactant monomer of formula 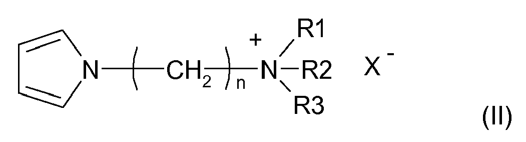 wherein,
or n is an integer ranging from 4 to 20, preferably 5 to 15, more preferably 11 or 12
R1, R2 and R3, independently represents an alkyl group linear or branched comprising from 1 to 4 carbon atoms, preferably 1 and 2 carbon atoms and
X represents an anion, preferably selected among BF₄ PF₆⁻, ClO₄⁻ NO₃⁻, NO₂⁻, Cl⁻, SO₄²⁻, phosphate, carbonates and acid anions.

According to a preferred embodiment of the invention, the surfactant is (11-Pyrrol-1-ylundecyl) triethylammonium tetrafluoroborate.

The weight ratio nanotubes/monomers in the aqueous composition is ranging from 0.004 to 1, preferably from 0.2 to 0.61.

The aqueous composition advantageously comprises from 0.001 to 0.1 % by weight of nanotubes, preferably from 0.01 to 0.1 % and from 0.08 to 0.25 % by weight of electropolymerizable surfactant monomers, preferably between 0.16 and 0.2 %.

The aqueous composition may further comprise a protein.

In this case, the weight ratio nanotube/protein is ranging from 0.001 and 0.2, preferably from 0.01 and 0.2, and the aqueous composition comprises from 0.01 to 10 % by weight of protein, preferably from 0.5 to 1 %.

Another object of the invention is a method for the preparation of an aqueous composition as described above, comprising the following steps:
i) solubilisation of the surfactant monomer
ii) addition of the single-wall carbon nanotubes in the aqueous solution comprising said surfactant monomer,
(iii) sonication of the resulting solution, and, optionally
(iv) addition of a protein.

Another object of the invention is a method for preparing a material coated with a polymer comprising carbon nanotubes, comprising the following steps:
(a) providing an aqueous composition as described above
(b) electropolymerizing the surfactant on the material in order to form a polymer coating.

The invention also concerns a material coated with a polymer coating comprising carbon nanotubes, wherein the polymer comprises electropolymerizable surfactant monomers as defined above and wherein the carbon nanotubes are hydrophobic single-wall carbon nanotubes.

### BRIEF DESCRIPTION OF THE FIGURES

- Figures 1A and 1B are SEM images of polypyrrole (PPy)film in narrow and larger areas;
- Figure 1C presents a SEM image of carbon nanotubes dispersed on the material surface after drying (before electropolymerization);
- Figure 1D is a SEM image of the surface of the material after electropolymerization;
- Figures 1E and 1F present SEM images of carbon nanotubes dispersed into PPy in ratio of 1:1 from a 1mg/ml CN/pyrrole monomer suspension, respectively before and after electropolymerization;
- Figures 1G and 1H present morphology of CN (1:4)-polypyrrole film respectively before and after electropolymerization;
- Figures 1I and 1J illustrate the morphology of CN (1:10)-polypyrrole film respectively before and after electropolymerization;
- Figure 2 shows Polymerizarea at cycling potentials (A) and transfer (B) of poly(pyrrole-alkyl ammonium-SWCNTs-Gox) biosensor after electropolymerization at 0.85 V vs. SCE;
- Figure 3 shows calibration plots for glucose for a) poly(pyrrole-alkyl ammonium-SWCNTs-Gox) and b) poly(pyrrole-alkyl ammonium-Gox);
- Figure 4 shows calibration plots for catechol for a) poly(pyrrole-alkyl ammonium-SWCNTs-PPO) and b) poly(pyrrole-alkyl ammonium-PPO);
- Figure 5 shows the amperometric responses at 0.6 V and - 0.1 V of the Gox-CN-polypyrrole and PPO-CN-polypyrrole biosensors to successive additions of 0.5 mM glucose and 0.5 mM catechol, respectively.

### DETAILED DESCRIPTION OF THE INVENTION

### Definition of the surfactant

The surfactant monomer is an electropolymerizable surfactant monomer of general formula:

X-Y-Z (I)

wherein
X is an electropolymerizable moiety selected from the group consisting of pyrrole, acetylene, phenol, aniline, thiophene, carbazole, indole and azulene, preferably pyrrole;
Y is a hydrophobic hydrocarbon chain and
Z is a polar group selected from the group consisting of quaternary ammonium salts, alkylphosphonates and sulfonates.

The electropolymerizable moiety is preferably a group pyrrole linked to the hydrophobic hydrocarbon chain through its cyclic nitrogen.

According to the invention, the hydrophobic hydrocarbon chain is linear or branched and comprises from 4 to 20 carbon atoms, preferably from 5 to 15 carbon atoms, more preferably 11 or 12 carbon atoms.

Carbon atoms may be replaced in the chain by other heteroatoms like oxygen or sulphur, provided however that these heteroatoms shall not affect substantially the hydrophobic properties of the hydrophobic hydrocarbon chain.

In preferred embodiments, the hydrophobic - hydrocarbon chain is a chain of formula -(CH₂)ₙ- wherein n is an integer ranging from 4 to 20, preferably 5 to 15, more preferably 11 or 12.

According to preferred embodiments of the invention, Z is an ammonium salt of formula 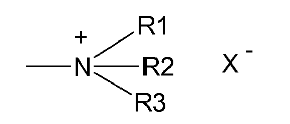 wherein:
R1, R2 and R3, independently represents an alkyl group linear or branched comprising from 1 to 4 carbon atoms, preferably 1 and 2 carbon atoms and
X represents an anion, preferably selected among BF₄, PF₆⁻, ClO₄⁻ NO₃⁻, NO₂⁻, Cl⁻, SO₄²⁻, phosphate, carbonates and acid anions...

In a preferred embodiment, R1, R2 and R3 are the same; more preferably R1, R2 and R3 are an ethyl group.

Preferred electropolymerizable surfactant monomers of the invention are represented by the general formula 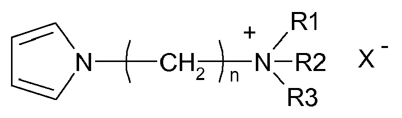 wherein R1, R2, R3, X and n are defined above.

According to a preferred embodiment of the invention, the surfactant monomer is a pyrrole-alkyl monomer.

(11-Pyrrol-1-ylundecyl) triethylammonium tetrafluoroborate was synthesized in the following manner according to a previously described protocol.

11-Pyrrol-1-ylundecanol (2.6g, 11 mmol) was reacted with tosyl chloride (2.85 g, 15 mmol) in anhydrous pyridine (3 ml). The mixture was stirred at 20°C for 15 h, washed with water, and extracted with dichloromethane. After evaporation, the crude product was purified by chromatography (3.05 g, yield 74%). 11-Pyrrol-1-ylundecyl p-toluenesulfonate (1.5 g) was refluxed for 15 h at 90 °C in ethanol (15 ml) with an excess of triethylamine (11 ml). The solvent and excess of triethylamine were removed under vacuum. Tosylate anions were then replaced by tetrafluoroborate anions on an ion-exchange column (Amberlite IRA 93) leading to a brown oil (1.44 g, yield 65%). H¹ NMR (250 MHz/CD₃Cl₃): δ (ppm) 6.62 (s, 2H), 6.09 (s, 2H), 3.83 (t, 2H), 3.24 (m, 6H), 3.07 (m, 2H), 1.58 (m, 2H), 1.35-1.23 (m, 25H).

### Preparation of the aqueous composition

The preparation of an aqueous composition according to the invention comprises the following steps:
i) solubilisation of the surfactant monomer
ii) addition of the single-wall carbon nanotubes in the aqueous solution comprising said surfactant monomer, and
(iii) sonication of the resulting solution.

The surfactant monomer is firstly suspended in pure distilled water and sonicated for a few hours - for instance, 3 h - to facilitate a total monomer solubilisation.

Then the single-wall carbon nanotubes are added to the monomer solution and the resulting solution is sonicated for 15 seconds. The maximum quantity of single-wall carbon nanotubes that can be dispersed in the solution is 1 mg/mL.

The weight ratio nanotubes/monomers is ranging from 0.004 to 1, preferably from 0.2 to 0.61.

The aqueous solution comprises from 0.001 to 0.1% by weight of nanotubes, preferably from 0.01 to 0.1% and from 0.08 to 0.25 % by weight of electropolymerizable surfactant monomers, preferably between 0.16 and 0.2 %.

Optionally, for example for making a biosensor, a protein can be added to the aqueous solution. The addition of the protein is done after the dispersion of the nanotubes is achieved.

In this case, the aqueous solution comprises from 0.01 to 10 % by weight of protein, preferably from 0.5 to 1 %, and the weight ratio nanotubes/protein is ranging from 0.001 and 0.2, preferably from 0.01 and 0.2.

### Electropolymerization

For preparing a material coated with a polymer comprising carbon nanotubes, the aqueous solution comprising well-dispersed carbon nanotubes is spread on the material with a microsyringe.

The solution comprising the nanotubes is thus adsorbed on the surface of the material and is further subjected to electrochemical polymerization by either controlled potential electrolysis or repetitive scanning of the material potential.

### Scanning electron microscopy characterization

The fundamental process in electrochemical reactions is the transfer of electrons between the working electrode surface and molecules in the interfacial region (either in solution or immobilized at the electrode surface). This heterogeneous process can be significantly affected by the microstructure and roughness of the electrode surface, the blocking of active sites on the electrode surface by adsorbed materials and the nature of the functional groups (e.g. oxides) present on the surface.

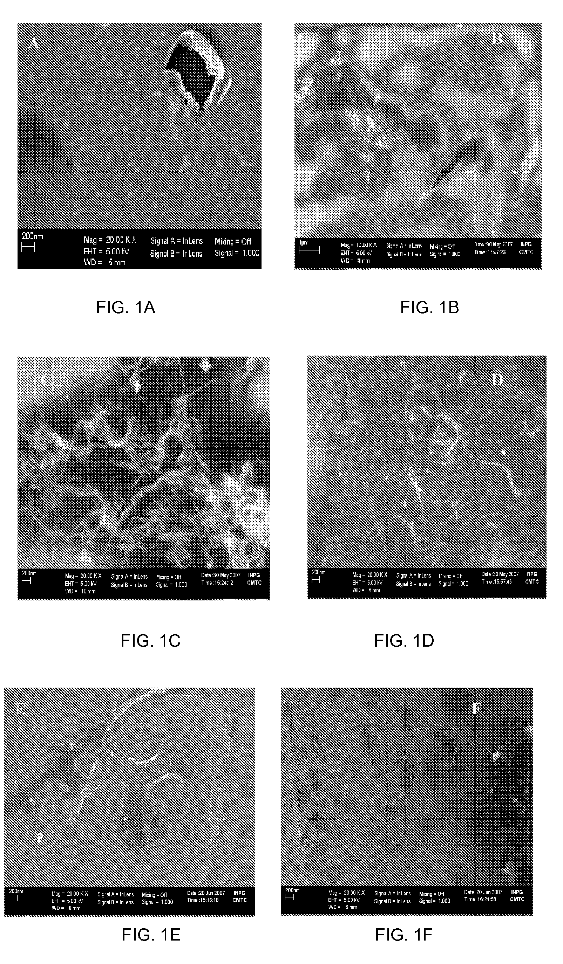

Presence of SWCNTs affect the deposition of polypyrrole, resulting in the formation of a uniform structure made of very well dispersed nanotubes (that can be seen on Fig. 1 D) which can be due initially to the surface adsorption of CNTs in presence of a surfactant (monomer pyrrole alkyl ammonium) and subsequent nucleation and electropolymerization of polypyrrole on them.

Hence correlation between the fabrications of high performance dispersed nanotube based polypyrrole composites and surface texture of the substrates should be taken into consideration.

Such a novel microstructure is of great interest for various applications in sensing/actuating devices.

In the studies performed by the inventors, FE-SEM was employed to investigate the nature of the poly(pyrrole alkyl ammonium) film formed at glassy carbon electrode surface.

Field emission scanning electron micrograph (FE-SEM) images of modified glassy carbon electrodes with poly(pyrrole alkyl ammonium) containing or not SWCNTs/enzymes were obtained using ULTRA 55 FESEM based on the renowned GEMENI® FESEM column with beam booster (Nano Technology Systems Division, Carl Zeiss NTS GmbH, Germany) with a tungsten gun and applying 5 kV as the accelerating voltage.

Figures 1A and 1B shows the images of polypyrrole (PPy)film in narrow and larger areas. These images clearly demonstrate the formation of uniformly electropolymerized films.

The quantity of carbon nanotubes dispersed on the surface of the electrode can be assessed from the quantity of carbon nanotubes in the solution spread onto the surface. Due to their lack of solubility, the carbon nanotubes cannot disperse again in the solution during electropolymerization. Hence, if 20 µL of solution with 1 mg/mL of carbon nanotubes are spread on the surface of the electrode, 20 µg of carbon nanotubes are deposited on the surface.

A special attention has been given to images of carbon nanotubes (1mg/ml) "encapsulated" in a pyrrole monomer solution, deposited onto a glassy carbon surface and dried at room temperature.

As Figure 1C shows the carbon nanotubes are well dispersed after drying process even though is very difficult to identify the presence of the pyrrole monomer onto electrode surface.

A major difference in the surface morphologies was observed after electropolymerization process of SWCNTs-(enzyme)-pyrrole monomer modified supports.

Figure 1D illustrates high yield deposition of polypyrrole on carbon nanotubes, when carbon nanotubes are being very well dispersed. We assume that the high specific surface area of the carbon nanotubes provided a higher surface for the occurrence of the electropolymerization process and hence an elevated dispersion rate.

Furthermore, morphologies of different ratios of carbon nanotubes (1:1, 1:4, 1:10) encapsulated into a polypyrrole-alkyl ammonium film have been analyzed.

Figures 1E and 1F present SEM images of carbon nanotubes dispersed into PPy in ratio of 1:1 from a 1mg/ml CN/pyrrole monomer suspension where Figure 1E presents the film morphology before electropolymerization, while Figure 1F was obtained after electropolymerization.

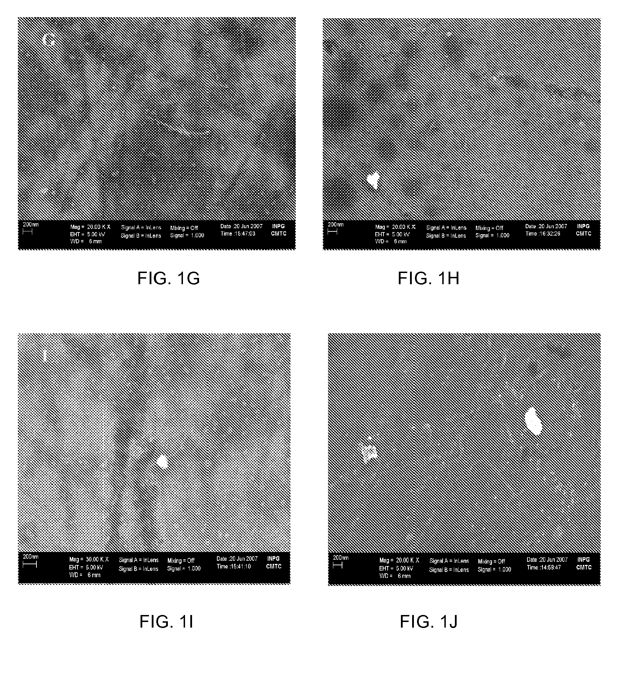

In the same way, Figure 1G presents morphology of CN (1:4)-polypyrrole film before electropolymerization while Figure 1H after its electropolymerization.

Finally, figure 1I illustrates the morphology of CN (1:10)-polypyrrole film before electropolymerization while Figure 1J after electropolymerization process.

All these SEM images are confirming the assumption that thanks to the highly nanotubes dispersion into an aqueous solution of a pyrrole amphiphilic their deposition can be controlled onto an electrode surface.

Hence, more (less) carbon nanotubes are dispersed into a pyrrole monomer solution, more (less) nanotubes will be "captured" by the electrogenerated polymeric network.

A new procedure to disperse and immobilize commercial SWCNT in water using the electropolymerizable surfactant 11-(pyrrol-1-yl)dodecyl]-triethylammonium tetrafluoroborate without any chemical pre-treatment of the SWCNT was described above. These aqueous dispersions can be adsorbed on electrode surfaces and electropolymerized leading to a homogeneous distribution of nanotubes in the resulting polypyrrole film. Contrarily to the simple adsorption of SWCNT that provides firewood aggregation, this approach leads to homogeneous films doped by SWCNT.

### Example - Application for making a biosensor

By entrapment of enzymes during the polymerization, high performance enzymatic (tyrosinase and glucose-oxidase) biosensors could be obtained. This procedure presents a facilitation of known procedures for the preparation of biosensors using functionalized SWCNTs or for the formation of composite films out of SWCNT dispersions using supplemental polymerizable groups or polymers.

### Materials

Glucose-oxidase (Gox, from *Aspergillus niger*, EC 1.1.3.4., lyophilized powder 179 U mg⁻¹), tyrosinase (PPO, from mushroom, EC 1.14.18.1, lyophilized powder 3620 U mg⁻¹), glucose and catechol were purchased from Sigma. LiClO4 was obtained from Acros Organics.

Single walled carbon nanotubes, produced by the HiPco® process (Purified, CNI grade/Lot #: P0313), were purchased from Carbon Nanotechnologies, Inc. (CNI) and used as received. SWCNTs are cylindrical in form and are about 1 nanometer (billionths of a meter) in diameter and hundreds to thousands of nanometers long.

### Apparatus

Electropolymerization and cyclic voltammetric experiments were performed with an EG&G PARC, Model 173 potentiostat equipped with a Model 175 universal programmer and a Model 179 digital coulometer in conjunction with a Kipp and Zonen BD 91 XY/t recorder. All experiments were carried out using a conventional three-electrode cell. The amperometric measurements were performed with a Tacussel PRG-DL potentiostat under magnetically stirred conditions of 250rpm in 0.1 M phosphate buffer (pH = 7). The working electrodes were glassy carbon (3mm diameter) or platinum discs (5mm diameter) polished with 2 µm diamond paste (MECAPREX Press PM). An aqueous saturated calomel electrode (SCE) was used as reference electrode while a Pt wire was used as counter electrode.

### Preparation of the biosensors

The polymer-enzyme electrodes were prepared according to the two-step procedure described above. The 6 mM pyrrole-alkylammonium monomer (brownish, oily suspension) was suspended in pure distilled water and sonicated for 3 h to facilitate a total monomer solubilization and then sonicated for few seconds with powder of SWCNTs (1 mg/ml) that change almost instantaneum the color of monomer suspension to light greenish very well visible.

The working electrodes, platinum disk or glassy carbon were modified at room temperature by spreading over their surface an aqueous mixture based on either 20 µl of pyrrole monomer-CN solution and 200 µg of Gox or based on 1 µl of pyrrole monomer-CN solution and 10 µg of PPO. The resulted electrodes were then dried at room temperature for 30 min and 10 min, respectively.

The resulting "dried" modified electrodes were transferred into a cell containing an aqueous 0.1 M LiClO₄ solution where were performed electrochemical polymerizations of the adsorbed coatings (pyrrole monomer-CN-Gox or pyrrole-monomer-CN-PPO) by either controlled potential electrolysis at 0.85 V versus SCE or by repetitive scanning of the electrode potential between 0 and 0.9 V.

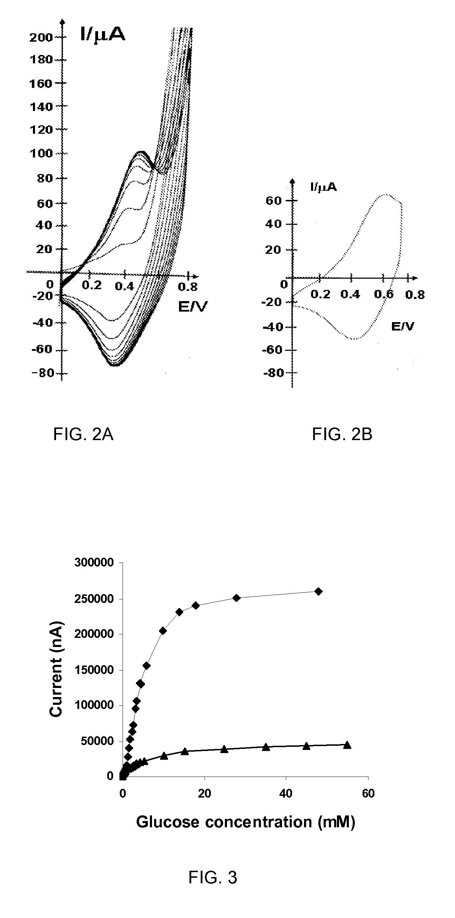

Initially, the electropolymerization by potential cycling was used to visualize the appearance and the growth of a quasi-reversible peak system around 0.5 V (Figure 2A).

Ulterior, for the amperometric investigations, pyrrole monomer-(CN)-Gox/PPO modified electrodes were electropolymerized at fixed potential.

Further, the polypyrrole-(CN)-enzymes modified electrodes were tested for their sensitivity to the specific substrates (glucose for Gox and catechol for PPO).

The analytical performances of modified SWCNTs - electrodes were compared with those of modified electrodes without nanotubes based only on either poly(pyrrole-alkyl ammonium - Gox ) or poly(pyrrole-alkyl ammonium - PPO).

### Electrochemical characterization of SWCNTs - Gox / SWCNTs-PPO polypyrrole biosensors

The oxidative electropolymerization of the adsorbed coating provides at 0.85 V the entrapment of either Gox or PPO molecules in the *in situ* generated polypyrrole film that contains or not the well dispersed carbon nanotubes. After electropolymerization, the modified electrodes were transferred into an aqueous 0.1 M LiClO₄ solution, free of monomer. The electrochemical characterization of the resulting electrodes with poly(pyrrole alkyl ammonium)-(SWCNTs) film containing 200 µg of Gox or 10 µg of PPO molecules were investigated by cyclic voltammetry in 0.1 M LiClO₄ aqueous solution. Figure 2B presents one example of a specific cyclic voltammogram (polypyrrole-CN-Gox) that has in the positive region, a reversible peak system at 0.5 V reflecting the well-known electroactivity of the polypyrrolic skeleton.

It was noticed that for the formation of polypyrrole-CN-Gox matrix the charge recorded under the oxidation and reduction waves during 10 min was of 70 mC which is remarkably higher when compared with 28 mC charge developed for the formation of polypyrrole-enzyme film, which corroborate very well with the theoretic calculated value of 27 mC.

This could be explained by the oxidation of carbon nanotubes in the same time with the pyrrole monomer units. Moreover, after the transferring process of electropolymerized electrodes modified or not with carbon nanotubes, the anodic charge was also increasing from 3 mC (theoretic calculated value is 3.82 mC) corresponding to the electrode modified with polypyrrole-Gox) to 10 mC for the electrode modified with polypyrrole-CN-Gox. Such results demonstrate the extraordinary influence of carbon nanotubes on the increasing electrical film conductivity.

### Calibration curves for poly(pyrrole-alkyl ammonium-SWCNTs-Gox) biosensors

Detection of glucose is one of the most frequently performed routine analyses in medicine. Around 5% of the populations of industrialized nations have diabetes, resulting in a high demand for the detection of glucose in body fluids. Glucose sensors normally incorporate glucose oxidase (Gox), an enzyme which catalyses the oxidation of β-D-glucose to D-glucono-1,5-lactone, using oxygen (O₂) as electron acceptor. The generated hydrogen peroxide (H₂O₂) is then electrochemically detected at an appropriate electrode. Gox shows a very high specificity for β-Dglucose, although the oxidation of 2-deoxy-D-glucose, D-mannose and D-fructose is also catalyzed, albeit with a much lower turnover rate.

Glucose is one of the most reported analytes detected via enzyme-carbon nanotubes electrodes. Several strategies were used to immobilize the necessary enzymes. Glucose oxidase have been immobilised onto carbon nanotubes via polypyrrole or even through carbon nanotubes inks.

In the experiments, glucose was detected amperometric in 0.1 M phosphate buffer (pH 7) by holding the modified electrodes at 0.6 V in order to oxidize the enzymatically generated H₂O₂ at the platinum underlying electrode. Figure 3 shows the calibration curves for glucose for poly(pyrrole-alkyl ammonium-SWCNTs-Gox) and poly(pyrrole-alkyl ammonium-Gox) biosensors. It is noticed the appearance of plateau for glucose at a concentration of 20 mM.

The performance characteristics of a range of CNT based glucose biosensors reported in the literature are compiled in increasing sensor sensitivity when immobilization of GOx is performed into an electropolymerized matrix. This can be attributed to the enhanced catalytic activity, good biocompatibility and large surface area obtained by combining the advantages of CNTs. Hence, a high sensitivity and maximum current of 130 mA M⁻¹ cm⁻² and 1250 pA cm⁻², respectively were obtained with CNT-Gox -biosensor when compared with 10 mA M⁻¹ cm⁻² and 250 pA cm⁻² characteristics for Gox-biosensor.

Another important factor for the practical use of these glucose sensors is the response time. The CN-Gox biosensors according to the invention are able to deliver a signal in less than five seconds comparativ with Gox immobilized in an electropolymerized polypyrrole film that is much slower (2-3 min).

### Calibration curves for poly(pyrrole-alkyl ammonium-SWCNTs-PPO) biosensors

With the aim of confirming the extraordinary influence of well dispersed carbon nanotubes upon the analytical performances of amperometric biosensors, the immobilization of tyrosinase in presence of carbon nanotubes via electropolymerization of pyrrole alkyl ammonium monomer was also studied.

Tyrosinase is a type (III) copper protein and is widely distributed in microorganisms, plants and animals. It catalyzes the orthohydroxylation of monophenols (monophenolase activity) by O₂, and can also catalyze the oxidation of o-diphenols to o-quinones (catecholase activity).

The mechanism of amperometric biosensor for phenols based on tyrosinase is that the tyrosinase at the surface of the electrode is oxidized by oxygen (this way tyrosinases are simple to use since molecular oxygen is the oxidant and no complex cofactors are required) and then reduced by phenolic compounds.

The phenolic compounds mainly convert into quinones that are produced are quite reactive and after diffusing from the enzyme's active site can undergo a cascade of uncatalyzed reactions. The products are electrochemically active and can be reduced on the electrode. The reduction current is proportional to the concentration of phenolic compounds in solution.

Until today no much reports are about the detection of phenolic compounds using CNs-tyrosinase support material. In the experiments the inventors have used poly(pyrrole alkyl ammonium -tyrosinase-SWNTs) modified glassy carbon electrodes as amperometric sensors for the successfully detection of catechol substrate. Due to SWNTs having high conductivity, high surface area and facilitation of electron transfer, the biosensor gave a high sensitivity as 900 mA M⁻¹ cm⁻², and the maximum current of 200 pA cm⁻². Such analytical performances are decreasing when the amperometric sensor poly(pyrrole alkyl ammonium -tyrosinase) is used for catechol determination when the sensitivity is only of 300 mAM⁻¹cm⁻² and a maximum current of 40 pA cm⁻².

The amperometric sensor based on the tyrosinase and SWCNTs was fabricated according to the method described above. The elaborated biosensors with and without nanotubes were stable in their amperometric responses over 15 days. For the amperometric experiments, the maximum current and the calibration curves were recorded in 0.1 M phosphate buffer with a pH of 7. The selected pH was in agreement with the optimum pH of tyrosinase activity reported in the literature.

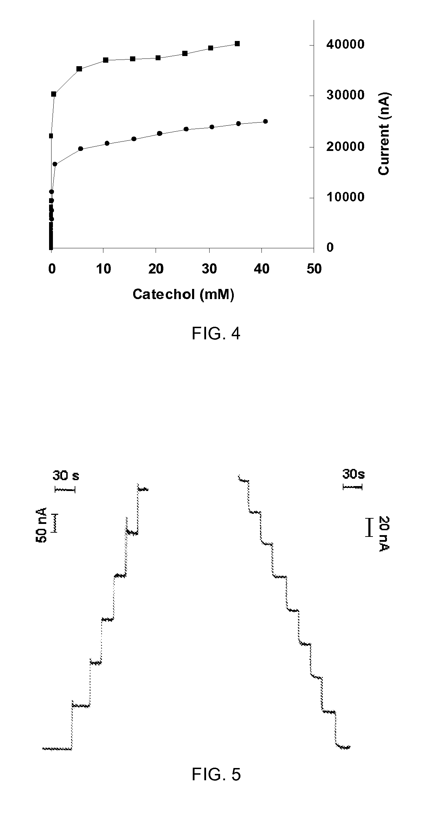

Figure 4 a), b) shows the calibrations plot of the two biosensor configurations: poly(pyrrole alkyl ammonium -tyrosinase-SWNTs) and poly(pyrrole alkyl ammonium -tyrosinase) to successive addition of catechol. When the steady-state baseline current reached, the catechol was added to the buffer with the magnetic bar stirring, and the response current increased quickly until reaching the steady state. The response time to reach 95% steady-state value was about 10 s for the CN-PPO biosensor and about 1 min for the PPO-biosensor.

### Amperometric responses for Gox-CN-polypyrrole and PPO-CN-polypyrrole biosensors

Figure 5 shows the amperometric responses at 0.6 V and - 0.1 V of the Gox-CN-polypyrrole and PPO-CN-polypyrrole biosensors to successive additions of 0.5 mM glucose and 0.5 mM catechol, respectively.

The prepared CN-Gox/PPO biosensors have good reproducibility. The relative standard deviations (RSD) of the sensor response to 0.5 mM glucose/catechol were 3.2% and 5.3% for 3 successive measurements. The RSD for three CN-Gox/PPO sensors were 2.7% and 3.3%, respectively.

### REFERENCES

W. Wenseleers, I. I. Vlasov, E. Goovaerts, E. D. Obraztsova, A. S. Lobach, A. Bouwen, Advanced Functional Materials 2004, 14, 1105.
O. Matarredona, H. Rhoads, Z. Li, J. H. Harwell, L. Balzano, D. E. Resasco, J. Phys. Chem. B 2003, 107, 13357.
M. F. Islam, E. Rojas, D. M. Bergey, A. T. Johnson, A. G. Yodh, Nano Lett. 2003, 3, 269.
K. D. Ausman, R. Piner, O. Lourie, R. S. Ruoff, M. Korobov, J. Phys. Chem. B 2000, 104, 8911.
R. Bandyopadhyaya, E. Nativ-Roth, O. Regev, R. Yerushalmi-Rozen, Nano Lett. 2002, 2, 25.
M. J. O'Connell, P. Boul, L. M. Ericson, C. Huffman, Y. Wang, E. Haroz, C. Kuper, J. Tour, K. D. Ausman, R. E. Smalley, Chemical Physics Letters 2001, 342, 265.
M. Gao, L. Dai, G. Wallace, Synth. Met. 2003, 137, 1393.
A. Callegari, S. Cosnier, M. Marcaccio, D. Paolucci, F. Paolucci, V. Georgakilas, N. Tagmatarchis, E. Vazquez, M. Prato, J. Mater. Chem. 2004, 14, 807.
G. Han, J. Yuana, G. Shia, F. Weic, Thin Solid Films 2005, 474, 64.
G. Cheng, J. Zhao, Y. Tu, P. He, Y. Fang, Analytica Chimica Acta 2005 533, 11.
H. Cai, Y. Xu, P.-G. He, Y.-Z. Fang, Electroanalysis,, No. 2003, 15, 1864.
L. Coche-Guérente, A. Deronzier, B. Galland, P. Labbé, J.-C. Moutet, G. Reverdy, J. Chem. Soc., Chem. Commun. 1991, 386
P. P. Joshi, S. A. Merchant, Y. Wang, D. W. Schmidtke, Anal. Chem. 2005, 77, 3183.
L. Coche-Guerente, A. Deronzier, B. Galland, P. Labbe, J.-C. Moutet, -. G. J. Reverdy 1991, Chem. Soc. Chem. Commun. 1991, 381, 6.

## Claims

1. Aqueous composition comprising carbon nanotubes and a surfactant, **characterized in that** the carbon nanotubes are single-wall hydrophobic nanotubes and **in that** the surfactant is chosen among electropolymerizable surfactant monomers of formula (I):
X-Y-Z (I)
wherein:
X is an electropolymerizable moiety selected from the group consisting of pyrrole, acetylene, phenol, aniline, thiophene, carbazole, indole and azulene
Y is a hydrophobic hydrocarbon chain and
Z is a polar group selected from the group consisting of quaternary ammonium salts, alkylphosphonates and sulfonates.

2. Aqueous composition according to claim 1**, characterized in that** the surfactant is an electropolymerizable surfactant monomer of formula 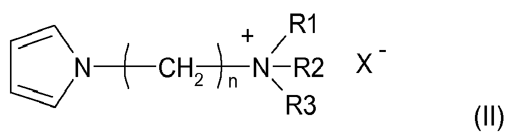 wherein,
n is an integer ranging from 4 to 20, preferably 5 to 15, more preferably 11 or 12
R1, R2 and R3, independently represents an alkyl group linear or branched comprising from 1 to 4 carbon atoms, preferably 1 and 2 carbon atoms and
X represents an anion, preferably selected among BF₄ PF₆⁻, ClO₄⁻ NO₃⁻, NO₂⁻, Cl⁻, SO₄²⁻, phosphate, carbonates and acid anions.

3. Aqueous composition according to claim 1 or 2, **characterized in that** the surfactant is (11-Pyrrol-1-ylundecyl) triethylammonium tetrafluoroborate.

4. Aqueous composition according to one of claims 1 to 3, wherein the weight ratio nanotubes/monomers is ranging from 0.004 to 1, preferably from 0.2 to 0.61.

5. Aqueous composition according to one of claims 1 to 4, wherein it comprises from 0.001 to 0.1 % by weight of nanotubes, preferably from 0.01 to 0.1 % and from 0.08 to 0.25 % by weight of electropolymerizable surfactant monomers, preferably between 0.16 and 0.2 %.

6. Aqueous composition according to one of claims 1 to 5, **characterized in that** it further comprises a protein.

7. Aqueous composition according to claim 6, wherein the weight ratio nanotube/protein is ranging from 0.001 and 0.2, preferably from 0.01 and 0.2.

8. Aqueous composition of one of claims 6 or 7, wherein it comprises from 0.01 to 10 % by weight of protein, preferably from 0.5 to 1 %.

9. Method for the preparation of an aqueous composition according to one of the preceding claims, **characterized in that** it comprises:
i) solubilisation of the surfactant monomer
ii) addition of the single-wall carbon nanotubes in the aqueous solution comprising said surfactant monomer,
(iii) sonication of the resulting solution, and, optionally
(iv) addition of a protein.

10. Method for preparing a material coated with a polymer comprising carbon nanotubes, **characterized in that** it comprises the following steps:
(a) providing an aqueous composition according to one of claims 1 to 5
(b) electropolymerizing the surfactant on the material in order to form a polymer coating.

11. Material coated with a polymer coating comprising carbon nanotubes, **characterized in that** the polymer comprises electropolymerizable surfactant monomers as defined in claims 1 to 3 and **in that** the carbon nanotubes are hydrophobic single-wall carbon nanotubes.
